# EUROPÄISCHE PATENTSCHRIFT

(11) **EP 2 756 218 B1**
(45) Veröffentlichungstag und Bekanntmachung des Hinweises auf die Patenterteilung: **09.12.2015**
(21) Anmeldenummer: 12772242.9
(22) Anmeldetag: 07.09.2012
(51) Int. Cl.: F16T 1/48, F04B 39/16

(54) **VERBESSERTES VERFAHREN ZUM AUTOMATISIERTEN ABLASSEN VON KONDENSAT AUS EINEM DRUCKGASSYSTEM**
IMPROVED METHOD FOR THE AUTOMATED DISCHARGE OF CONDENSATE FROM A PRESSURIZED GAS SYSTEM
PROCÉDÉ AMÉLIORÉ D'ÉVACUATION AUTOMATISÉE DU CONDENSAT PRÉSENT DANS UN SYSTÈME À GAZ COMPRIMÉ

(30) Priorität: 08.09.2011 DE 102011053410
(43) Veröffentlichungstag der Anmeldung: 23.07.2014
(73) Patentinhaber: Beko Technologies GmbH, 41468 Neuss (DE)
(72) Erfinder: FELTGEN, Martin, 42109 Wuppertal (DE)
(74) Vertreter: Patentanwälte Bauer Vorberg Kayser
(86) Internationale Anmeldenummer: PCT/EP2012/067487
(87) Internationale Veröffentlichungsnummer: WO 2013/034673

(56) Entgegenhaltungen:
- EP-A2- 0 081 826
- DE-A1- 19 645 815
- JP-A- H0 666 399

## Beschreibung

Gegenstand der vorliegenden Erfindung ist ein Verfahren zum automatisierten Ablassen von Kondensat aus einem Druckgassystem mittels eines Kondensatableiters sowie ein Kondensatableiter mit entsprechend ausgerüsteter Steuer- und Überwachungselektronik.

In Druckgassystemen, wie Druckluftsystemen, fällt aus im Wesentlichen Wasser und Öl bestehendes Kondensat an, das beispielsweise vom Schmiermittel der Kompressoren und dem Feuchtigkeitsgehalt des Gases herrührt. Dieses Kondensat beeinträchtigt in der Regel den zweckgemäßen Gebrauch des Druckgassystems durch Verschmutzung, Verstopfung und Korrosion. Daher muss es gesammelt und von Zeit zu Zeit aus dem an sich geschlossenen Druckgassystem abgelassen werden, möglichst ohne dass Gas oder Druckluft in größeren Mengen verlorengeht und der Druck im System signifikant sinkt.

Es ist bekannt, solche Ablassvorgänge in fest vorgegebenen Zeitintervallen vorzunehmen. Diese nicht bedarfsgesteuerte Vorgehensweise hat den Nachteil, dass es möglicherweise und unter anderem zu den zuvor erwähnten Druckverlusten wegen unnötiger Ablassvorgänge kommt. Idealerweise wird der Füllstand quantitativ und kontinuierlich überwacht, um den Ablassvorgang sowohl von seiner Dauer als auch von seinem Zeitpunkt füllstandsabhängig zu steuern. Zur quantitativen Füllstandsmessung ist es bekannt, mit Schwimmer ausgerüstete Kondensatableiter zu benutzen, wobei hier die Gefahr besteht, dass es zu Verklebungen kommt und damit das Kondensat nicht mehr abgeleitet werden kann bzw. es zu dadurch bedingten Druckgasverlusten durch unnötiges Abblasen des Druckgases kommt. Es ist daher ferner bekannt, den Füllstand indirekt zu überwachen, beispielsweise durch kapazitive Messung.

Eine quantitative Messung ist somit, wenn auch aufwändig, technisch möglich. Beim Ablassvorgang gibt es jedoch Probleme, da, um eine zuverlässige Füllstandsmessung überhaupt zu ermöglichen, Turbulenzen im angestauten, mit Druck beaufschlagten Kondensat vermieden werden müssen. Dies ist insbesondere bei den in der Regel kleinvolumigen Sammelbereichen der gängigen Kondensatableiter unmöglich. Anders ausgedrückt ist somit die Füllstandsüberwachung während des Ablassvorgangs in der Regel "blind".

Druckschrifte DE-196 45 815-A, EP-0081826-A und JP-06 066 399 offenbaren solche Verfahren zum automatisierten Ablassen von Kondensat aus einem Druckgassystem.

Aufgabe der vorliegenden Erfindung ist es daher, ein Verfahren zum automatisierten Ablassen von Kondensat aus einem Druckgassystem mittels eines Kondensatableiters bereitzustellen, bei dem ein zuverlässiger und ein weitgehend unnötigen Druckverlust vermeidender automatisierter Kondensatablass mittels eines Kondensatableiters gewährleistet ist. Weiterhin wird ein entsprechend verbesserter Kondensatableiter bereitgestellt. Gelöst wird diese Aufgabe durch ein Verfahren mit den Merkmalen des Anspruchs 1 sowie durch einen Kondensatableiter gemäß dem nebengeordneten Anspruch. Vorteilhafte Ausgestaltungen sind jeweils Gegenstand der abhängigen Ansprüche. Es ist darauf hinzuweisen, dass die in den Patentansprüchen einzeln aufgeführten Merkmale in beliebiger, technologisch sinnvoller, Weise miteinander kombiniert werden können und weitere Ausgestaltungen der Erfindung aufzeigen. Die Beschreibung, insbesondere im Zusammenhang mit den Figuren, charakterisiert und spezifiziert die Erfindung zusätzlich.

Das erfindungsgemäße Verfahren ist für das automatisierte Ablassen von Kondensat aus einem Druckgassystem, bevorzugt aus einem Druckluftsystem, mittels eines Kondensatableiters bestimmt, wobei Letzterer einen Sammelbereich für das Kondensat, einen Sensor zur Füllstandsüberwachung des Kondensats im Sammelbereich sowie ein ansteuerbares Ablassventil für das Ablassen des Kondensats aus dem Sammelbereich aufweist.

Das erfindungsgemäße Verfahren eignet sich prinzipiell für jegliche Art von Füllstandssensorik, beispielsweise auch eine quantitative Sensorik, also eine solche, die in der Lage ist, den Füllstand kontinuierlich über alle möglichen Füllstandshöhen im Sammelbereich zu detektieren. Eine solche zuvor beschriebene Detektion ist aufwändig, bevorzugt handelt es sich um eine solche, die das singuläre Erreichen eines vorgegebenen Füllstandes detektiert, beispielsweise eines vorgegebenen Maximalfüllstandes. Eine derartige Sensorik ist preiswert zu realisieren und vergleichsweise zuverlässig. Bevorzugt wird der Füllstand durch kapazitive Messung ermittelt.

Das erfindungsgemäße Verfahren weist in zeitlicher, sich wiederholender Abfolge drei im Folgenden näher erörterte Schritte auf.

Einen Sammelschritt, bei dem Kondensat über eine vorgegebene Sammeldauer in dem Sammelbereich des Kondensatableiters gesammelt wird.

Es ist ferner einen den Sammelschritt abschließender Detektionsschritt vorgesehen. "Abschließend" meint, dass der Zeitpunkt der Feststellung des Detektionsschritts, ob Kondensat im Sammelbereich vorliegt oder nicht, die Sammeldauer des laufenden Sammelschritts definiert. Auf diesen Zeitpunkt kommt es erfindungsgemäß zur Definition der Sammeldauer an, es kann vorher eine kontinuierliche und fortlaufende Messung und damit Überwachung des Füllstandes vorgesehen sein. Wird zu diesem Zeitpunkt kein Kondensat oder kein ausreichender Kondensatsfüllstand festgestellt, erfolgt kein Ablassschritt, wird also übersprungen und es wird unmittelbar ein neuer Sammelschritt durchgeführt.

Ferner ist ein Ablassschritt vorgesehen, bei dem für eine vorgegebene Ablassdauer Kondensat durch Öffnen des Ablassventils aus dem Sammelbereich des Kondensatableiters abgelassen wird, sofern im vorhergehenden Detektionsschritt Kondensat im Sammelbereich detektiert wurde. Die "positive" Entscheidung im Detektionsschritt triggert somit den Ablassschritt. Eine möglicherweise zeitliche Verzögerung zwischen Detektion und Ablassen wäre der definierten Sammeldauer zu Bestimmung der Gesamtsammelzeit hinzuzuaddieren.

Erfindungsgemäß ist vorgesehen, dass für den Fall, bei dem erstmalig oder spätestens wiederholt beim Detektionsschritt Kondensat detektiert wird, die Sammeldauer wenigstens eines der folgenden Sammelschritte, bevorzugt des nächstfolgenden Sammelschritts, verkürzt und/oder die Ablassdauer wenigstens eines der folgenden Ablassschritte, bevorzugt des nächstfolgenden Ablassschritts, zeitlich verlängert wird und/oder ein Öffnungsgrad des Ablassventils bei wenigstens eines der folgenden Ablassschritte, bevorzugt des nächstfolgenden Ablassschritts vergrößert wird und dass für den Fall, bei dem erstmalig oder wiederholt kein Kondensat im Sammelbereich detektiert wird, die Sammeldauer wenigstens eines der folgenden Sammelschritte, bevorzugt des nächstfolgenden Sammelschritts verlängert und/oder die Ablassdauer wenigstens eines der folgenden Ablassschritte, bevorzugt des nächstfolgenden Ablassschritts, zeitlich verkürzt wird und/oder ein Öffnungsgrad des Ablassventils bei wenigstens eines der folgenden Ablassschritte, bevorzugt des nächstfolgenden Ablassschritts, verringert wird. Die Begrifflichkeiten "Verkürzen", "Verringern" bzw. "Verlängern" "'Vergrößern" beziehen sich hier jeweils auf den geänderten aktuellen Schritt im Vergleich zum zeitlich vorhergehenden, entsprechenden Schritt.

Das Verfahren hat somit den Vorteil, dass trotz der weitgehenden Unmöglichkeit der Füllstandsüberwachung während des Ablassvorgangs sich ein zumindest annähernd bezüglich der Dauer, des Umfangs und/oder des Zeitpunkts optimierter Ablass einstellt, bei dem weitgehend unnötige Ablassvorgänge, d.h. Ablassvorgänge, ohne dass Kondensat abgelassen wird, vermieden werden, nämlich indem wenigstens einer der zuvor genannten Ablassparameter in geschickter Weise variiert wird. Durch die Regelung wird erreicht, dass einerseits im Verhältnis zur durchschnittlichen Zulaufmenge möglichst wenig Kondensat je Zyklus angesammelt andererseits dies mit möglichst wenig Ablassschritten erreicht wird, um den durch die Öffnungs- und Schließbewegung verursachten Verschleiß des Ablassventils so gering wie möglich zu halten, indem möglichst viel Kondensat innerhalb des verfügbaren Sammelbereichs je Ablassvorgang gesammelt wird (gegebenenfalls auch oberhalb des im Detektionsschritt zugeordneten Niveaus) jedoch ohne Überlauf in vorgelagerte Bereiche oder Behälter des Druckgassystems.

Es obliegt dem Fachmann, das jeweilige zeitliche Variationsmaß je nach baulichen Gegebenheiten von Kondensatableiter oder Druckgassystem gegebenenfalls nach einigen wenigen praktischen Versuchen entsprechend zu wählen. Das erfindungsgemäße Verfahren eignet sich für Kondensatableiter mit unterschiedlichsten Volumen des Sammelbereichs von 1 ml bis einigen Dekaden Litern, wie 15 ml bis 40 Liter.

Gemäß einer weiteren Ausgestaltung des erfindungsgemäßen Verfahrens wird bei einer ersten Wiederholung -gemeint ist eine direkte unmittelbare Wiederholung - der Detektion von Kondensat im Sammelbereich nur die Sammeldauer beim nächstfolgenden Sammelschritt verkürzt. Um auf einen abrupten Anstieg beim Kondensat reagieren zu können, wird jedoch bevorzugt schon bei erster Detektion von Kondensat im darauf folgenden Sammelschritt die Sammelzeit gegenüber dem vorhergehenden Sammelschritt verkürzt. Durch die Beschränkung der Variierung auf lediglich die Sammeldauer wird ein "moderater" Eingriff auf die Notwendigkeit eines Kondensatablasses realisiert. Da größere Druckverluste im Druckgassystem zu starken Druckschwankungen im Druckgassystem führen, sind kürzere Abstände zwischen den Kondensatablassvorgängen zumindest als erste Reaktion auf eine Kondensatdetektion bevorzugt.

Bei einer nochmaligen Wiederholung werden beispielsweise sowohl der zeitliche Abstand verkürzt als auch die Ablassdauer zeitlich verlängert. Die Verlängerung der Ablassdauer hat neben der schnelleren Entleerung des Kondensats auch noch einen reinigenden Spüleffekt.

Dementsprechend wird bevorzugt bei einer ersten Nicht-Detektion von Kondensat im Sammelbereich sowohl die Sammeldauer verlängert als auch die Ablassdauer beim nächstfolgenden Ablassschritt verkürzt. Bei einer nochmaligen Wiederholung der Nicht-Detektion werden beispielsweise sowohl der zeitliche Abstand verlängert als auch die Ablassdauer zeitlich verkürzt, um den Druckabfall zu minimieren.

Zur Verbesserung der Effizienz der Wartungsarbeiten ist gemäß einer weiteren Ausgestaltung des erfindungsgemäßen Verfahrens vorgesehen, dass bei mehr als zweifacher Wiederholung der Detektion von Kondensat im Sammelbereich ein optisches oder akustisches Alarmsignal erzeugt wird.

Auch wenn erfindungsgemäß der Detektionsschritt zeitlich vor dem Ablassvorgang liegt und ein solcher zumindest zu Beginn des Ablassvorgangs aufgrund von Turbulenzen vermieden werden soll, ist erfindungsgemäß ein weiterer Füllstandsmessschritt auch während des Ablassvorgangs nicht prinzipiell ausgeschlossen. Beispielsweise kann ein weiterer Sensor zur Detektion des Erreichens eines Mindestfüllstandes beim Ablassen vorgesehen sein, um beispielsweise die Durchführung des Ablassvorgangs zu überwachen.

Gemäß einer bevorzugten Ausgestaltung des erfindungsgemäßen Verfahrens ist vorgesehen, dass während des Sammelschritts wenigstens ein weiterer Messschritt zur Überwachung des Füllstandes während des Sammelschritts vorgesehen ist. Dieser Messschritt ist beispielsweise vorgesehen, um mittels einer Plausibilitätsüberprüfung die Funktion der Füllstandssensorik zu überprüfen. Beispielsweise ist ein weiterer, einem mittleren oder einem Minimalfüllstand zugeordneter Sensor vorgesehen. Bei einer Plausibilitätsüberprüfung würde bei Detektion des Erreichens des Maximalfüllstands als Messergebnis das Erreichen des mittleren bzw. des Minimalfüllstandes voraussetzen. Bei widersprüchlichem Ergebnis wird beispielsweise eine akustische oder optische Störungs- oder Alarmmeldung erzeugt. Ferner kann anhand dieses wenigstens eines Messschrittes die Geschwindigkeit der Füllstandszunahme abgeschätzt werden. Dies dient beispielsweise dazu bei zu schnellem Kondensatzulauf eine akustische oder optische Störungs- oder Alarmmeldung zu erzeugen.

Bei einer weiteren vorteilhaften Ausgestaltung des erfindungsgemäßen Verfahrens dient das Ergebnis der die Füllstandszunahme betreffenden Geschwindigkeitsabschätzung dazu, das jeweilige Änderungsmaß von Sammeldauer, Ablassdauer und/oder Öffnungsgrad festzulegen. D.h. insbesondere bei stark schwankenden Kondensatzulaufströmen dient diese Abschätzung um das Maß der Änderung bei der jeweiligen Verkürzung bzw. Verlängerung der Sammeldauer und/oder der Ablassdauer und/oder der Verkleinerung bzw. Vergrößerung des Öffnungsgrades zu variieren. Beispielsweise wird die Geschwindigkeit anhand der Zeitdauer zwischen Beendigung des Ablassschrittes und des Erreichen des mittleren oder Minimalfüllstandes im Messschritt ermittelt.

Die Erfindung betrifft ferner einen Kondensatableiter für ein Druckgassystem, der einen Sammelbereich für das Kondensat, einen Sensor zur Füllstandsüberwachung des Kondensats im Sammelbereich, ein ansteuerbares Ablassventil für das Ablassen des Kondensats aus dem Sammelbereich, sowie eine elektronische Steuer- und Überwachungsschaltung aufweist, wobei letztere ausgelegt ist, das Verfahren in einer der zuvor beschriebenen, mit den jeweiligen Vorzügen versehenen Ausführungsformen durchzuführen.

Zur Verringerung der Störungsanfälligkeit ist gemäß einer vorteilhaften Ausgestaltung vorgesehen, dass das Ablassventil druckgasgesteuert ist und der Kondensatableiter ferner ein elektromagnetisch arbeitendes Steuerventil umfasst, so dass mittels des Druckgases ein gesteuertes Öffnen und Schließen des Ablassventils bewirkt wird, indem beispielsweise zum Schließen das Ablassventil mit Druck beaufschlagt wird.

Bevorzugt wird als Ablassventil ein Membranventil verwendet, weil es sich als besonders störunanfällig erwiesen hat.

Die Erfindung sowie das technische Umfeld werden nachfolgend anhand der Figuren näher erläutert. Es ist darauf hinzuweisen, dass die Figuren eine besonders bevorzugte Ausführungsvariante der Erfindung zeigen, diese jedoch nicht darauf beschränkt ist. Es zeigen schematisch:
- Fig. 1:: eine Schnittansicht eines gattungsgemäßen Kondensatableiters, bei dem das erfindungsgemäße Verfahren zur Anwendung kommt;
- Fig. 2:: ein zugehöriges schematisches Ablaufdiagramm.

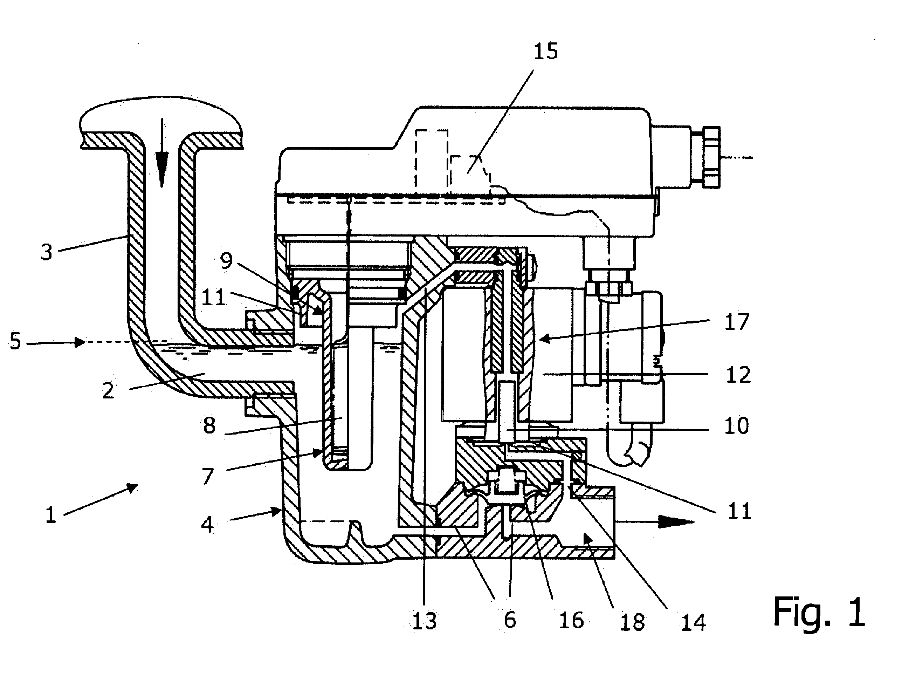

Fig. 1 zeigt einen Kondensatableiter 1 für ein Druckluftsystem in einer Schnittansicht. Kondensat 2, das während der Verdichtung der Druckluft anfällt, wird über eine Zuleitung 3 dem Kondensatableiter 1 zugeführt. Das Kondensat 2 ist im Wesentlichen kondensierte Feuchtigkeit der Umgebungsluft, die ein hier nicht dargestellter Druckluftkompressor ansaugt. Es weist ferner regelmäßig ölige und partikelförmige metallische Bestandteile auf.

Das Kondensat 2 sammelt sich in einem Kondensatsammelbereich 4 und wird nach Erreichen eines definierten Füllstandes 5 über ein in der Ablassleitung 6 vorgesehenes Ablassventil 16 und den Ablassstutzen 18 abgelassen. In der in Fig. 1 gezeigten Ausgestaltung ist das Ablassventil 16 als Membranventil ausgestaltet.

Es ist eine kapazitive Sensorik 7 zur quantitativen Messung des Füllstands im Kondensatsammelbereich 4 vorgesehen. Die Sensorik 7 umfasst zumindest einen Messkondensator 8, der eine in Abhängigkeit vom Füllstand des Kondensates 2 im Kondensatsammelbereich 4 stetig veränderliche Kapazität aufweist. Die kapazitive Messung erfasst somit den Füllzustand des Kondensatsammelbereichs 4 durch die Änderung der elektrischen Kapazität, wenn Kondensat 2 als Dielektrikum zufließt. Der Messkondensator 8 bildet ein elektromagnetisches Messfeld zwischen einer ersten dezidiert ausgebildeten Kondensatorelektrode und einer zweiten durch die Wandung des Kondensatsammelbereichs 4 bereitgestellten Gegenelektrode aus. Auch bei starker Verschmutzung beispielsweise durch Rost aus den Druckluftleitungen oder Öl aus den Druckluftkompressoren ist die gezeigte Vorrichtung sehr zuverlässig. Der Sensor 7 ist so angeordnet, dass auch bei geflutetem Kondensatsammelbereich 4 eine vom Kondensat nicht benetzte und damit saubere Zone 9 verbleibt, um Fehlmessungen zu vermeiden, die beispielsweise durch Beläge, die zu einem messtechnischen Kurzschluss führen können, verursacht werden. Die Sensorik 7 kann ferner in einer nichtdargestellten Ausführungsform einen weiteren Sensor umfassen, der beispielsweise im Rahmen eines weiteren Messschritts das Erreichen eines Mindestvolumens des Sammelbereichs 4 detektiert. Der Sensor ist beispielsweise im unteren Bereich des Sammelbereichs 4 vorgesehen.

Die saubere Zone 9 wird definiert durch eine taucherglockenähnliche Ausnehmung 11. Bei vollständig geflutetem Sammelbereich 4 - also auch über den maximal vorgesehenen Füllstand 5 hinaus - kann in die saubere Zone 9 beziehungsweise in die taucherglockenähnliche Ausnehmung 11 kein Kondensat 2 eindringen. In der sauberen Zone 9 über dem maximal vorgesehenen Füllstand 5 ist auch der Einlass der Druckluftleitung 13 vorgesehen. Die darüber abgezweigte Druckluft dient der Betätigung des Ablassventils 16 bzw. dem Halten des Ablassventils in seiner geschlossenen Stellung. Dazu ist das elektromagnetische Ventil 17 vorgesehen, das in der dargestellten Stellung dafür sorgt, dass Druckluft so an der Membran des Ablassventils 16 anliegt, dass die Ablassleitung 6 verschlossen ist und kein Kondensat 2 abgelassen werden kann. Das elektromagnetische Ventil 17 umfasst eine Spule 12 und einen permanentmagnetischen Anker 10, der durch den von einem durch die Spule fließenden Stellstrom aus einer Ruhestellung, beispielswiese der in Fig. 1 gezeigten der geschlossenen Stellung des Ablassventils 16 entsprechenden Stellung, in eine Sollstellung bewegt wird. Die Ruhestellung ergibt sich dadurch, dass der Anker 10 an einer seiner Stirnflächen ein elastisches Dichtmaterial aufweist und bei dessen Schwerkraft und Druckluft unterstütztem Anliegen der Stirnfläche an einen Ventilsitz 11 ein Verschließen der Druckluftablassleitung 14 bewirkt wird, so dass die Druckbeaufschlagung des Ablassventils 16 beibehalten wird. Zur Ansteuerung des elektromagnetischen Ventils 17 ist eine elektronische Steuer- und Überwachungsschaltung 15 vorgesehen.

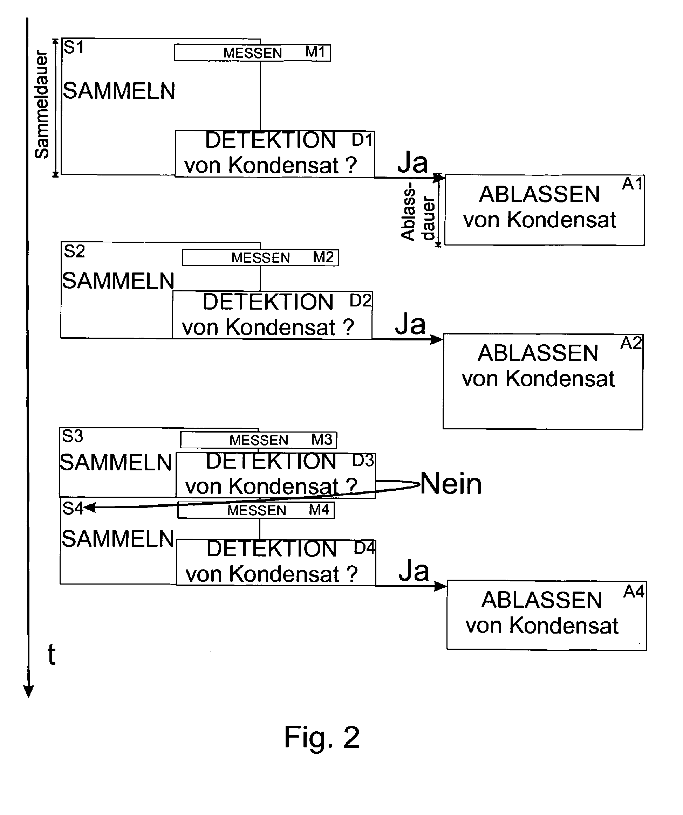

Die Schaltung ist ausgelegt, die erfindungsgemäßen Verfahrensschritte in der in Fig. 2 beispielhaft und nur ausschnittsweise dargestellten, zeitlichen Abfolge in Richtung des mit t bezeichneten Pfeils durchzuführen. Es sind die erfindungsgemäßen Sammelschritte S1 bis S4, die Detektionsschritte D1 bis D4, sowie die Ablassschritte A1, A2 und A4. Ferner sind noch während der Sammelschritte durchgeführte Messschritte vorgesehen. Die Ausdehnung der Schritte S1 bis S4 in Richtung des Zeitpfeils t gibt die jeweilige Sammeldauer an. Die Ausdehnung der Schritte A1, A2 und A4 in Richtung des Zeitpfeils t gibt die jeweilige Ablassdauer an. Während der Ablassschritte A1, A2, A4 erfolgt kein Detektionsschritt.

Mit Abschluss des Sammelschritts S1 wird im Detektionsschritt D1 detektiert, ob der Maximalfüllstand 5 erreicht ist. Da die Sensorik ein Erreichen des Füllstandes signalisiert, wird das Ablassventil 16 für eine Ablassdauer im Ablassschritt A1 geöffnet, um Kondensat abzulassen. Nach Ablauf der Ablassdauer, wird das Ablassventil 16 geschlossen. Es beginnt der Sammelschritt S2. Da vorher Kondensat detektiert wurde, ist dessen Sammeldauer verkürzt. Diese unmittelbare Reaktion auf eine Detektion von Kondensat, sorgt dafür, dass sehr frühzeitig Kondensat abgeleitet wird, um ein möglicherweise schwallhaftes Anstauen zu vermeiden. Der Sammelschritt S2 wiederum mit einem Detektionsschritt D2 abgeschlossen wird. Es wird wiederum ein Erreichen des Maximalfüllstandes im Schritt D2 detektiert, was zur Folge hat, dass einerseits ein Ablassschritt A2 mit gegenüber dem vorherigen Ablassschritt verlängerter Ablassdauer durchgeführt wird und andererseits der sich an den Ablassschritt A2 wiederum anschließender Sammelschritt S3 eine gegenüber dem vorherigen Sammelschritt S2 verkürzte Sammeldauer aufweist. Mit Ablauf dessen Sammeldauer erfolgt ein Detektionsschritt D3. Da dessen Ergebnis ist, dass kein Kondensat vorhanden ist oder zumindest nicht der vorgegebene Füllstand erreicht ist, wird kein Ablassschritt A3 durchgeführt, sondern mit einem neuen Sammelschritt S4 fortgesetzt, dessen Sammeldauer gegenüber dem vorhergehenden Sammelschritt S3 verlängert ist. Dieser Sammelschritt S4 endet nach dessen verlängerter Sammeldauer mit einem Detektionsschritt D4, der die Notwendigkeit eines Ablassschrittes A4 detektiert. Dessen Ablassdauer ist aufgrund des Zwischenergebnisses des Detektionsschrittes D3 verkürzt gegenüber dem vorhergehenden Ablassschritt A2. Dieses automatische Ablassverfahren kann fortlaufend erfolgen, wobei die dargestellte Abfolge nur beispielhaft ist. Die während der Sammelschritte S1 bis S4 vorgesehenen Messschritte M1 bis M4 dienen der Überwachung des Sammelverhaltens während der Sammelschritte S1 bis S4. Der Messschritt M1 bis M4 ergibt sich hier jeweils durch das Erreichen des mittleren oder eines Mindestniveaus an und definiert jeweils eine Zeitdauer zwischen Beendigung und Erreichen dieses mittleren oder Mindestniveau. Diese Zeitdauer ermöglicht die Abschätzung des Füllverhaltens und hat Einfluss auf das Änderungsmaß in dessen Umfang die Sammeldauer und die Ablassdauer wenigstens in dem jeweils folgenden Sammel- bzw. Ablassschritt geändert wird. Ferner dient der Messschritt der Funktionsüberwachung.

## Patentansprüche

1. Verfahren zum automatisierten Ablassen von Kondensat aus einem Druckgassystem mittels eines Kondensatableiters, wobei der Kondensatableiter einen Sammelbereich für das Kondensat, einen Sensor zur Detektion von Kondensat im Sammelbereich sowie ein ansteuerbares Ablassventil für das Ablassen des Kondensats aus dem Sammelbereich aufweist, wobei das Verfahren in zeitlicher, sich wiederholender Abfolge aufweist:
einen Sammelschritt (S1, S2, S3, S4), bei dem Kondensat über eine vorgegebene Sammeldauer gesammelt wird;
einen den Sammelschritt (S1, S2, S3, S4) wenigstens abschließenden Detektionsschritt (D1, D2, D3,D4), um mittels des Sensors Kondensat im Sammelbereich zu detektieren,;
einen Ablassschritt(A1, A2, A4), bei dem über eine vorgegebene Ablassdauer Kondensat abgelassen wird, sofern im Detektionsschritt Kondensat im Sammelbereich detektiert wird;
**dadurch gekennzeichnet, dass** für den Fall, bei dem erstmalig oder spätestens wiederholt beim Detektionsschritt (D1, D2, D3, D4) Kondensat detektiert wird, die Sammeldauer wenigstens eines der folgenden Sammelschritte, bevorzugt des nächstfolgenden Sammelschritts, verkürzt und/oder die Ablassdauer wenigstens eines der folgenden Ablassschritte, bevorzugt des nächstfolgenden Ablassschritts, zeitlich verlängert wird und/oder ein Öffnungsgrad des Ablassventils bei wenigstens eines der folgenden Ablassschritte, bevorzugt des nächstfolgenden Ablassschritts, vergrößert wird und dass für den Fall, bei dem erstmalig oder wiederholt kein Kondensat im Sammelbereich detektiert wird, die Sammeldauer wenigstens eines der folgenden Sammelschritte, bevorzugt des nächstfolgenden Sammelschritts, verlängert und/oder die Ablassdauer wenigstens eines der folgenden Ablassschritte, bevorzugt des nächstfolgenden Ablassschritts, zeitlich verkürzt wird und/oder ein Öffnungsgrad des Ablassventils bei wenigstens eines der folgenden Ablassschritte, bevorzugt des nächstfolgenden Ablassschritts, verringert wird.

2. Verfahren zum Ansteuern eines Kondensatableiters in einem Druckgassystem gemäß Anspruch 1, **dadurch gekennzeichnet, dass** nach einer ersten Detektion von Kondensat im Sammelbereich beim Detektionsschritt (D1, D2, D3, D4) nur die Sammeldauer für den nächsten Sammelschritt verkürzt wird.

3. Verfahren zum Ansteuern eines Kondensatableiters in einem Druckgassystem gemäß einem der vorhergehenden Ansprüche, **dadurch gekennzeichnet, dass** bei einer ersten Nicht-Detektion von Kondensat im Sammelbereich beim Detektionsschritt (D1, D2, D3, D4) sowohl die Sammeldauer für den nächsten Sammelschritt verlängert werden als auch die Ablassdauer für den nächstfolgenden Ablassschritt verkürzt werden.

4. Verfahren zum Ansteuern eines Kondensatableiters in einem Druckgassystem gemäß einem der vorhergehenden Ansprüche, **dadurch gekennzeichnet, dass** bei mehrfacher Wiederholung der Detektion von Kondensat im Sammelbereich im Detektionsschritt (D1, D2, D3, D4) ein optisches oder akustisches Alarmsignal erzeugt wird.

5. Verfahren zum Ansteuern eines Kondensatableiters in einem Druckgassystem gemäß einem der vorhergehenden Ansprüche, **dadurch gekennzeichnet, dass** im Detektionsschritt (D1, D2, D3, D4) der Fall der Detektion von Kondensat durch Überschreiten eines vorgegebenen Füllzustands ausgelöst wird.

6. Verfahren zum Ansteuern eines Kondensatableiters in einem Druckgassystem gemäß einem der vorhergehenden Ansprüche, **dadurch gekennzeichnet, dass** während des Sammelschritts (S1, S2, S3, S4) wenigstens ein weiterer Messschritt (M1, M2, M3, M4) zur Überwachung des Füllstandes während des Sammelschritts (S1, S2, S3, S4) vorgesehen ist.

7. Verfahren zum Ansteuern eines Kondensatableiters in einem Druckgassystem gemäß dem vorhergehenden Anspruch, **dadurch gekennzeichnet, dass** mittels des wenigstens einen Messschritts (M1, M2, M3, M4) die Geschwindigkeit der Füllstandszunahme abgeschätzt wird und anhand dieser Abschätzung das jeweilige Änderungsmaß von Sammeldauer, Ablassdauer und/oder Öffnungsgrad festgelegt wird.

8. Kondensatableiter (1) für ein Druckgassystem, aufweisend einen Sammelbereich (4) für das Kondensat (2), einen Sensor zur Füllstandsüberwachung des Kondensats (2) im Sammelbereich (4), ein ansteuerbares Ablassventil (16), für das Ablassen des Kondensats (2) aus dem Sammelbereich (4), sowie eine elektronische Steuer- und Überwachungsschaltung (15), die ausgelegt ist, das Verfahren gemäß einem der vorhergehenden Ansprüche 1 bis 5 durchzuführen.

9. Kondensatableiter (1) gemäß dem vorhergehenden Anspruch, wobei das Ablassventil (16) druckgasgesteuert ist und der Kondensatableiter (1) ferner ein elektromagnetisch arbeitendes Steuerventil (17) umfasst, so dass mittels des Druckgases ein gesteuertes Öffnen und Schließen des Ablassventils (16) bewirkt wird.

10. Kondensatableiter gemäß einem der beiden vorhergehenden Ansprüche, **dadurch gekennzeichnet, dass** das Ablassventil (16) ein Membranventil ist.

11. Verwendung des Kondensatableiters gemäß einem der Ansprüche 8 bis 10 in einem Druckluftsystem.

## Claims

1. A method for the automated discharge of condensate from a pressurized gas system by means of a condensate drainage means, wherein the condensate drainage means comprises a collecting region for the condensate, a sensor for the detection of condensate in the collecting region, and a controllable discharge valve for discharging the condensate from the collecting region, the method comprising in a repeating time sequence:
a collecting step (S1, S2, S3, S4) in which the condensate is collected over a predefined collecting duration;
a detection step (D1, D2, D3, D4) that at least completes the collecting step (S1, S2, S3, S4) in order to detect condensate in the collecting region by means of the sensor;
a discharge step (A1, A2, A4) in which condensate is discharged for a predefined discharge duration, provided condensate was detected in the collecting region in the detection step;
**characterized in that**, for the case in which condensate is detected for the first time or at the latest repeatedly in the detection step (D1, D2, D3, D4), the collecting duration of at least one of the subsequent collecting steps, preferably of the next collecting step, is shortened and/or the discharge duration of at least one of the subsequent discharge steps, preferably of the next discharge step, is extended in time and/or a degree of opening of the discharge valve in at least one of the subsequent discharge steps, preferably of the next discharge step, is increased, and that, for the case in which no condensate is detected for the first time or repeatedly in the collecting region, the collecting duration of at least one of the subsequent collecting steps, preferably of the next collecting step, is extended and/or the discharge duration of at least one of the subsequent discharge steps, preferably of the next discharge step, is shortened in time and/or a degree of opening of the discharge valve in at least one of the subsequent discharge steps, preferably of the next discharge step, is reduced.

2. The method for controlling a condensate drainage means in a pressurized gas system according to claim 1, **characterized in that**, after a first detection of condensate in the collecting region in the detection step (D1, D2, D3, D4), only the collecting duration for the next collecting step is shortened.

3. The method for controlling a condensate drainage means in a pressurized gas system according to any one of the preceding claims, **characterized in that**, in case of a first non-detection of condensate in the collecting region in the detection step (D1, D2, D3, D4), the collecting duration for the next collecting step is extended and the discharge duration for the next discharge step is shortened.

4. The method for controlling a condensate drainage means in a pressurized gas system according to any one of the preceding claims, **characterized in that**, in case of a multiple repetition of the detection of condensate in the collecting region in the detection step (D1, D2, D3, D4), a visual or acoustic alarm signal is generated.

5. The method for controlling a condensate drainage means in a pressurized gas system according to any one of the preceding claims, **characterized in that**, in the detection step (D1, D2, D3, D4), the case of the detection of condensate is triggered by exceeding a predefined filling state.

6. The method for controlling a condensate drainage means in a pressurized gas system according to any one of the preceding claims, **characterized in that**, during the collecting step (S1, S2, S3, S4), at least one further measuring step (M1, M2, M3, M4) for monitoring the filling level is provided during the collecting step (S1, S2, S3, S4).

7. The method for controlling a condensate drainage means in a pressurized gas system according to the preceding claim, **characterized in that** the speed of the filling level increase is estimated by means of the at least one measuring step (M1, M2, M3, M4), and that the respective measure of change of the collecting duration, the discharge duration and/or the degree of opening is established by means of this estimate.

8. A condensate drainage means (1) for a pressurized gas system, comprising a collecting region (4) for the condensate (2), a sensor for monitoring the filling level of the condensate (2) in the collecting region (4), a controllable discharge valve (16) for discharging the condensate (2) from the collecting region (4), and an electronic controlling and monitoring circuit (15), which is configured to carry out the method according to any one of the preceding claims 1 to 5.

9. Condensate drainage means (1) according to the preceding claim, wherein the discharge valve (16) is controlled by pressurized gas and the condensate drainage means (1) moreover comprises an electromagnetically operating control valve (17), so that a controlled opening and closing of the discharge valve (16) is caused by means of the pressurized gas.

10. The condensate drainage means according to any one of the two preceding claims, **characterized in that** the discharge valve (16) is a diaphragm valve.

11. Use of the condensate drainage means according to any one of the claims 8 to 10 in a pressurized air system.

## Revendications

1. Procédé d'évacuation automatisée de condensat d'un système à gaz comprimé au moyen d'un purgeur de vapeur, ledit purgeur de vapeur présentant une zone collectrice pour le condensat, un capteur pour la détection de condensat dans ladite zone collectrice ainsi qu'une soupape de décharge apte à être commandée pour évacuer le condensat de la zone collectrice, le procédé présentant dans l'ordre chronologique récurrent:
- une étape d'accumulation (S1, S2, S3, S4) dans laquelle du condensat est accumulé pendant une durée d'accumulation prédéterminée;
- une étape de détection (D1, D2, D3, D4) qui, au moins, termine l'étape d'accumulation (S1, S2, S3, S4), afin de détecter, au moyen dudit capteur, du condensat présent dans ladite zone collectrice;
- une étape d'évacuation (A1, A2, A4) dans laquelle du condensat est évacué pendant une durée d'évacuation prédéterminée, si du condensat est détecté dans la zone collectrice dans ladite étape de détection;
**caractérisé par le fait que**, au cas où du condensat serait détecté pour la première fois ou, au plus tard, de manière répétée lors de l'étape de détection (D1, D2, D3, D4), la durée d'accumulation de l'une au moins des étapes suivantes d'accumulation, de préférence de l'étape suivante d'accumulation, est réduite et/ou la durée d'évacuation de l'une au moins des étapes suivantes d'évacuation, de préférence de l'étape suivante d'évacuation, est prolongée dans le temps et/ou un degré d'ouverture de la soupape de décharge est augmenté dans l'une au moins des étapes suivantes d'évacuation, de préférence dans l'étape suivante d'évacuation, et que, au cas où aucun condensat ne serait détecté pour la première fois ou de manière répétée dans la zone collectrice, la durée d'accumulation de l'une au moins des étapes suivantes d'accumulation, de préférence de l'étape suivante d'accumulation, est prolongée et/ou la durée d'évacuation de l'une au moins des étapes suivantes d'évacuation, de préférence de l'étape suivante d'évacuation, est réduite dans le temps et/ou un degré d'ouverture de la soupape de décharge est réduit dans l'une au moins des étapes suivantes d'évacuation, de préférence dans l'étape suivante d'évacuation.

2. Procédé de commande d'un purgeur de vapeur dans un système à gaz comprimé selon la revendication 1, **caractérisé par le fait que**, après une première détection de condensat dans la zone collectrice lors de l'étape de détection (D1, D2, D3, D4), c'est seulement la durée d'accumulation pour l'étape suivante d'accumulation qui est réduite.

3. Procédé de commande d'un purgeur de vapeur dans un système à gaz comprimé selon l'une quelconque des revendications précédentes, **caractérisé par le fait que**, dans le cas d'une première non-détection de condensat dans la zone collectrice lors de l'étape de détection (D1, D2, D3, D4), et on prolonge la durée d'accumulation pour l'étape suivante d'accumulation et on réduit la durée d'évacuation pour l'étape suivante d'évacuation.

4. Procédé de commande d'un purgeur de vapeur dans un système à gaz comprimé selon l'une quelconque des revendications précédentes, **caractérisé par le fait que**, dans le cas d'une répétition multiple de la détection de condensat dans la zone collectrice dans l'étape de détection (D1, D2, D3, D4), un signal d'alarme optique ou acoustique est généré.

5. Procédé de commande d'un purgeur de vapeur dans un système à gaz comprimé selon l'une quelconque des revendications précédentes, **caractérisé par le fait que**, dans l'étape de détection (D1, D2, D3, D4), le cas de la détection de condensat est déclenché par dépassement d'un niveau de remplissage prédéterminé.

6. Procédé de commande d'un purgeur de vapeur dans un système à gaz comprimé selon l'une quelconque des revendications précédentes, **caractérisé par le fait qu'**au moins une autre étape de mesure (M1, M2, M3, M4) est prévue durant l'étape d'accumulation (S1, S2, S3, S4), pour surveiller le niveau de remplissage durant l'étape d'accumulation (S1, S2, S3, S4).

7. Procédé de commande d'un purgeur de vapeur dans un système à gaz comprimé selon la revendication précédente, **caractérisé par le fait que** ladite au moins une étape de mesure (M1, M2, M3, M4) sert à estimer la vitesse de l'augmentation du niveau de remplissage et que l'on détermine, à partir de cette estimation, la mesure respective de changement de la durée d'accumulation, de la durée d'évacuation et/ou du degré d'ouverture.

8. Purgeur de vapeur (1) pour un système à gaz comprimé, comprenant une zone collectrice (4) pour le condensat (2), un capteur de surveillance du niveau de remplissage du condensat (2) dans ladite zone collectrice (4), une soupape de décharge (16) apte à être commandée, pour évacuer le condensat (2) de ladite zone collectrice (4), ainsi qu'un circuit électronique de commande et de surveillance (15) qui est adapté pour mettre en oeuvre le procédé selon l'une quelconque des revendications précédentes 1 à 5.

9. Purgeur de vapeur (1) selon la revendication précédente, dans lequel ladite soupape de décharge (16) est commandée par gaz comprimé et le purgeur de vapeur (1) comprend en outre une vanne de commande (17) travaillant de façon électromagnétique de sorte qu'une ouverture et fermeture contrôlée de la soupape de décharge (16) est provoquée au moyen du gaz comprimé.

10. Purgeur de vapeur selon l'une quelconque des deux revendications précédentes, **caractérisé par le fait que** ladite soupape de décharge (16) est une soupape à diaphragme.

11. Utilisation du purgeur de vapeur selon l'une quelconque des revendications 8 à 10, dans un système à air comprimé.
